# EUROPEAN PATENT APPLICATION

(11) **EP 1 182 759 A2**
(43) Date of publication of application: **27.02.2002**
(21) Application number: 01119574.0
(22) Date of filing: 16.08.2001
(51) Int. Cl.: H02B 1/30, H05K 7/18

(54) **Adjustable electronic enclosure**

(30) Priority: 18.08.2000 US 642026
(71) Applicant: Hoffman Enclosures Inc., Anoka, MN 55303-7501 (US)
(72) Inventor: Mordick, Brian L., Shorewood, Minnesota 55126 (US); Lange, Tim, Champlin, Minnesota 55316 (US); Sandquist, Jacob, Minneapolis, Minnesota 55418 (US)
(74) Representative: Durm, Frank, Dipl.-Ing.

(57) **Abstract**

An adjustable enclosure system has enclosures with a substantially rectangular framework of interconnected frame members and a housing connected to the framework defining an enclosed space. The enclosure system accommodates one or more removable adjustably mounted shelves and removably mounted doors mounted to the frame. The doors and shelves are interchangeable with other sets of doors and shelves to reconfigure each enclosure to define different number of separate modules and different sizes of modules within each enclosure. The enclosure includes mounting locations to accommodate interchanging doors and shelves in the field without permanently modifying the frame or housing.
Adjustable shelves include mounting brackets to change the relative horizontal position of the shelf supports.

## Description

### Background of the Invention

### 1. Field of the Invention

The present invention is directed to an adjustable electronics enclosure system, and in particular to an electronics enclosure having interchangeable doors and shelving to create different sizes and combinations of separate modules to accommodate changing needs of the user.

### 2. Prior Art

Electrical and electronics enclosures are well known and typically include a rectangular frame with a housing mounted to the frame. Although such enclosures come in a variety of configurations, the different configurations must generally be manufactured and assembled for the final intended configuration and require different parts for each configuration. The prior art electronics enclosures do not provide for changing the configuration of the enclosure in the field and generally would require permanent modification to the framework.

Such enclosures typically are rectangular and upright, having a height greater than the depth or width. Components are generally placed on shelves within the enclosure. The shelves create spaces that serve as individual modules receiving different sizes of equipment.

Due to developments in the electronics industry and in particular spurred by the vast growth in Internet use, needs have arisen to provide enclosures that are adjustable and changeable in the field. Internet service providers often provide the space for the equipment necessary for web site owners' servers. The individual enclosure housings are typically arranged in a side-by-side relationship with multiple enclosure housings connected to form an extended bank of enclosures. The individual owners of equipment require varying amounts of storage space within the enclosures. For example, a user with a single web site may have equipment that requires only a small portion of one of the enclosures. Owners with more equipment may require larger portions of an enclosure, an entire enclosure or multiple enclosures. To reduce the amount of space required and number of enclosures, it is desirable for owners of equipment to use only the necessary amount of space for their equipment so that each enclosure may house more than one set of equipment. This raises security problems as access should be provided only to the equipment for each particular owner. As the enclosures are filled with additional equipment, it may be necessary to install more than one owner's equipment in an enclosure and to provide access only to that particular equipment. This requires that the enclosure be adjustable in the field to accommodate changing the number of doors or number of shelves that divide the enclosure into separate modules. Doors and shelves provide security so that access to each individual module may be controlled. In addition, it is also possible that as needs expand, enclosures having multiple shelves and doors may be rearranged so that only one owner has equipment within the enclosure and that the number of doors and shelves may need to be reduced.

Such adjustability and freedom of design and configuration is preferably accomplished without requiring replacement by an entire new enclosure. It is preferable that the doors and shelving providing the security between the modules be interchangeable with other sets of doors and shelves. In addition, interchanging should be accomplished in the field without requiring equipment such as drills or other power equipment that would require permanent modification of the frame and/or housing.

In addition to the changing of modules, the type of equipment that is within the enclosure may also be changed so that the shelves themselves may need to be adjusted on their supports. Prior systems require different mounting hardware to adjust the size of the shelf and position of mounting to the frame. This requires additional manufacturing costs and maintaining a larger parts inventory for making adjustments.

It can be seen that a new improved enclosure system is needed that allows easy adjustability and interchangeability to accommodate various sized modules. Such a system should provide for changing the position of the shelves, enclosure doors and also allow for easy changing of different components and hardware in the field without permanent modification of the frame and housing. The present invention addresses these as well as other problems associated with electronics enclosure systems.

### Summary of the Invention

The present invention relates to an enclosure system that provides several types of adjustability with a single frame and housing accepting interchangeable doors and associated shelving to provide multiple configurations for the enclosure. The enclosure system has flexibility to create different size separate storage modules in each enclosure without modifying the frame or housing and changes may be made in the field after the enclosure is installed.

The enclosure system may include multiple enclosures connected in a side-by-side configuration forming a bank of connected enclosures. Each enclosure may be divided into modules to separate equipment housed in the enclosure. Each enclosure includes a framework having a rectangular latticework of frame members and an outer housing mounted to the framework. The frame members have mounting holes extending along their length for receiving housing panels and internal components. In addition, vertical frame members include door mounting holes for receiving door hardware. The door mounting holes are located at spaced apart intervals to accommodate one, two, three or four doors for multiple enclosure configurations. The vertical frame members have door mounting holes on either side of the door opening so that doors may be mounted to open to either the left or the right without modifying the frame. Doors may be mounted on one or both ends.

Each enclosure typically has one less shelf than the number of doors. The shelves are movable and interchangeable within the enclosure to define separate modules within each enclosure. Vertical supports provide support and added stability to the shelves. Cable conduits lead to associated holes in the shelves and top so that cables for the electronic equipment may be routed into conduits extending through other modules separated from the module without requiring access to the other modules.

The present enclosure system also has adjustable shelves with mounting brackets that provide for moving the mounting location and relative positions of the vertical supports. The mounting locations depend on the position needed to accommodate the equipment within the enclosure. The mounting brackets may be slid relative to the sides of the shelves and attached with hardware to slots in the sides of the shelves for greater flexibility. The brackets are also reversible to increase the range for extension and retraction and greater mounting flexibility.

These features of novelty and various other advantages that characterize the invention are pointed out with particularity in the claims annexed hereto and forming a part hereof. However, for a better understanding of the invention, its advantages, and the objects obtained by its use, reference should be made to the drawings that form a further part hereof, and to the accompanying descriptive matter, in that there is illustrated and described a preferred embodiment of the invention.

### Brief Description of the Drawings

Referring now to the drawings, wherein like reference letters and numerals indicate corresponding structure throughout the several views:
Figure 1 shows a front elevational view of an electronics enclosure system according to the principles of the present invention;
Figure 2 shows an exploded perspective view of an electronics enclosure;
Figure 3 is perspective view of an electronics enclosure with outer panels removed;
Figure 4 is a side elevational view of the electronics enclosure frame shown in Figure 3;
Figure 5 is a side elevational view of the electronics enclosure frame shown in Figure 3 with 2 shelves;
Figure 6 is a top sectional view of the electronics enclosure shown in Figure 2;
Figure 7 shows a perspective view of an adjustable shelf for the enclosure system shown in Figure 2 in a first mounting configuration;
Figure 8 shows a perspective view of an adjustable shelf for the enclosure system shown in Figure 2 in a second mounting configuration; and
Figure 9 shows a perspective view of an adjustable shelf for the enclosure system shown in Figure 2 in a first mounting configuration.

### Detailed Description of the Preferred Embodiment

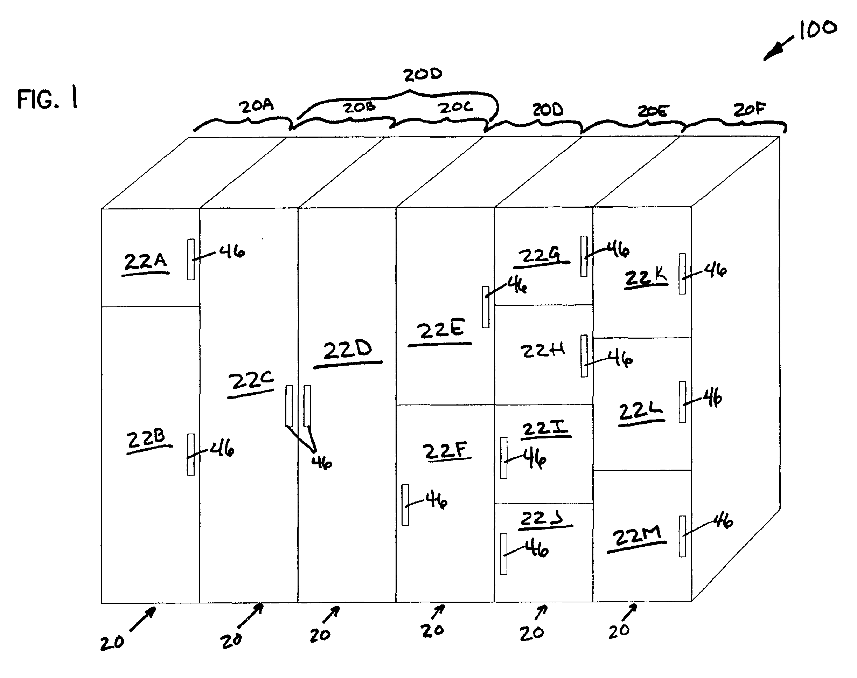

Referring to the drawings, and in particular to Figure 1, there is shown an enclosure system, generally designated 100. The enclosure system 100 includes individual enclosures 20 joined together in a side-by-side relationship to form a bank of enclosures. Each of the enclosures 20 may be made up of one or more enclosure modules, generally designated 22. It will be readily apparent that the present enclosure system 100 includes enclosures that take on a variety of different configurations and the enclosures 20 and modules 22 illustrated are given by way of example only and other enclosure configurations are also possible with the present system 100. The adjustability of the system 100 provides for interchanging different sets of doors and shelving arrangements, as explained hereinafter, to achieve a flexible easily reconfigurable enclosure system 100 that may take on multiple different configurations.

For example, enclosure 20A includes a first module 22A and a second module 22B. Each of the doors pivot at the left side as shown in Figure 1 with handles at the right. However, it is possible that the doors could pivot on the right with the handle on the left, as shown in enclosure 20C on module 22I and 22J. In addition, the doors 22A and 22B could be reversed with the longer door 22B being on top of the door for the shorter module 22A. In addition, enclosure 20, such as 20B may include just a single module 22C extending the entire height of the enclosure. The doors are reversible as explained earlier and may be configured to open as shown with enclosure 20C. In addition, enclosures may be combined with adjacent enclosures by removing center panels to create a doublewide enclosure as shown at 20D. With this configuration, the doors are preferably placed so that they pivot on the opposed edges of the enclosure 20D with door handles 46 proximate one another. Although enclosure 20D is shown with full-length doors, it will be apparent to those skilled in the art that configurations with opposed doors that do not extend the entire height of the enclosure are also contemplated by the present invention.

Referring to enclosure 20E, it will be appreciated that the enclosure may be divided into two modules having substantially even heights. In addition, enclosure 20E shows that doors may be mounted on opposite edges of the same enclosure to accommodate the different needs of the users even within the same enclosure. The enclosure 22E, has a left pivoting door on module 22E and right pivoting door on module 22F. Enclosure 20F shows an enclosure and four modules, 22G, 22H, 22I and 22J. The doors on modules 22G and 22H pivot to the left while the doors on 22I and 22J pivot to the right. Enclosure 20G includes three modules of substantially even height, module 22K, 22L and 22M. The end of the bank of enclosures 100 allows for joining additional enclosures to the system 100 performing a greater extended bank of enclosures 20. The various doors and shelves may be mixed and matched with the present invention to create additional embodiments.

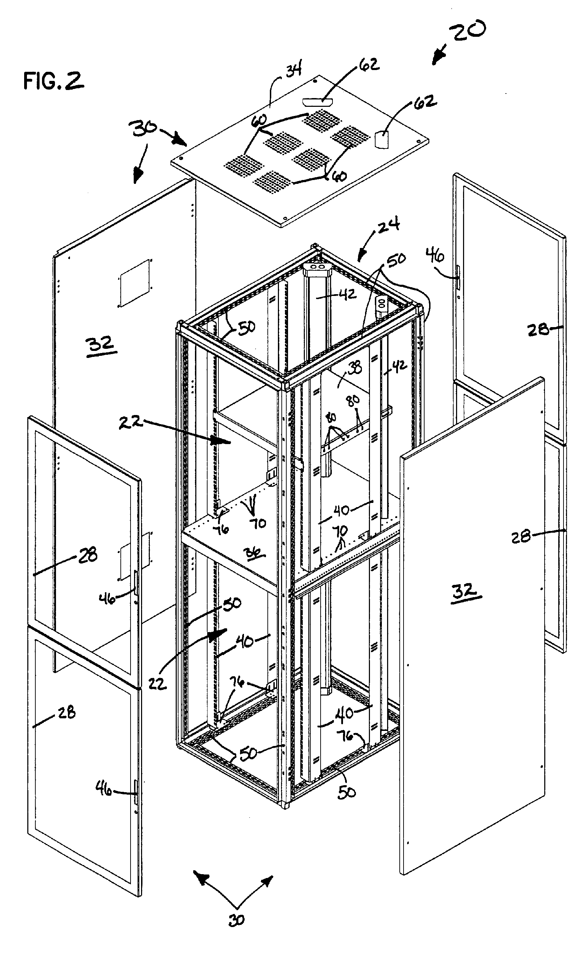

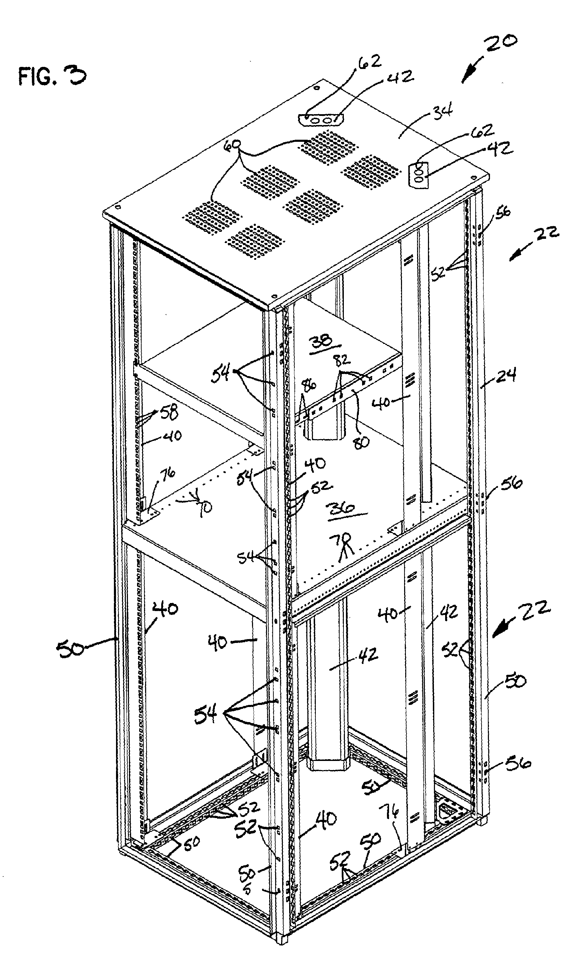

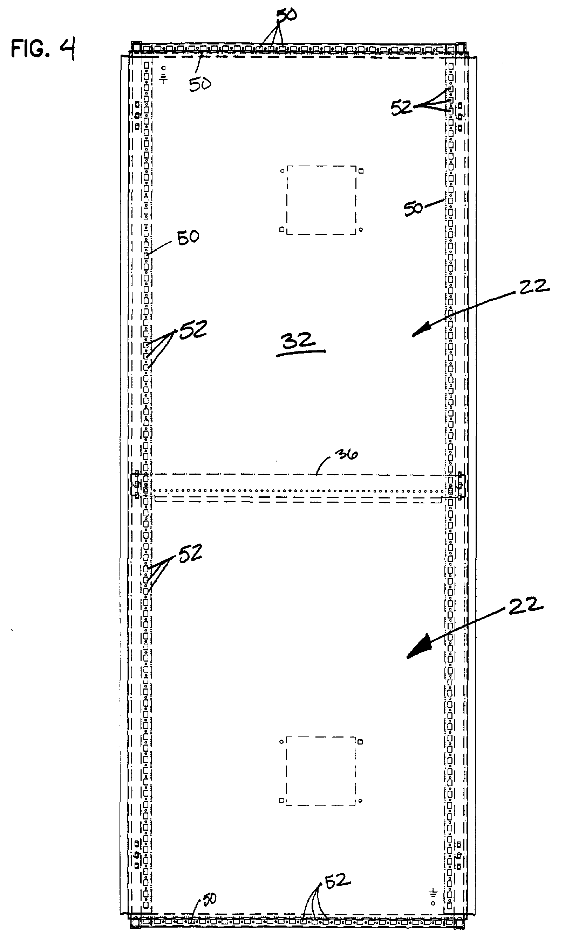

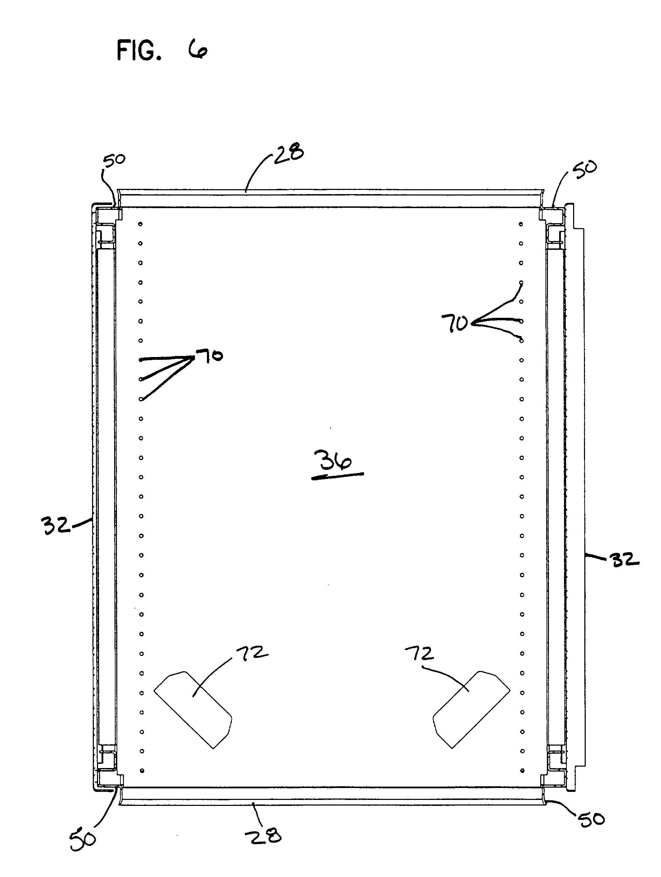

Referring now to Figures 2 and 3, a typical enclosure 20 is shown. The enclosure 20 includes two modules 22, although as explained above, various numbers of modules may be configured within the same enclosure. The enclosure 20 has a frame 24 including frame members 50 joined together in a substantially rectangular latticework. A housing 26 includes side panels 32 and a top 34 with vents 60 mounted to the frame 24. Doors 28 mount on opposed ends as also shown in Figure 6, although doors may be placed on only one end and a panel covering the other end, depending on the access needs and requirements. One or more shelves 36 are placed in the enclosure 20 with the number of shelves being generally one less than the number of modules 22. In addition, an adjustable shelf 38 generally having an area less than the shelf 36 may be placed within one or more of each of the modules for improved equipment configuration. Inclusion of the adjustable shelf 38 depends on the equipment being placed within each module 22. Right angle type shelf supports 40 mount to the frame 24 and the shelf 36. The shelf supports 40 include attachment orifices 58 and a mounting bracket 76. The height of the supports 40 is varied depending on the placement of the shelves and the number of shelves. However, various lengths of shelf supports 40 are interchangeable with sets of other supports 40 to accommodate the different shelving needs. Each module 22 may also include cable conduits 42 extending up through the shelf and through the top 34 of the enclosure to provide security to the individual module and cabling access without requiring access to other independent modules 22 to route cable.

Each of the frame members 50 includes a number of component mounting holes 52. Such mounting holes are well known in the field of enclosure frames for mounting shelves and other components inside the enclosure 20. In addition, door-mounting holes 54 provide for mounting hinges, latches and other hardware necessary for attaching the doors 28 to the frame 24. The various mounting hole and attachment locations are spaced to accommodate all of the typical module sizes such as shown in Figure 1 and extend along both vertical frame members 50 on each end of the enclosure 20. With this configuration, the doors 28 may be removed in the field and other doors having a different size may be mounted in place of the doors 28.

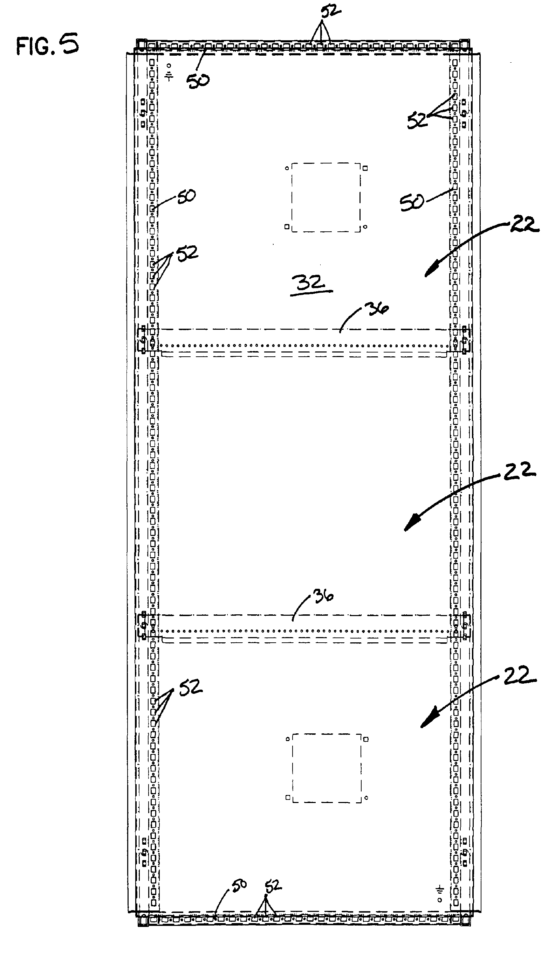

Referring now to Figures 4 and 5, it can be shown that the enclosure 20 may be adapted to a different number of modules 22 by changing the number of shelves 36. As shown in Figure 4, the enclosure 20 may be configured with a single shelf 36 and two modules 22, such as the modules 22E and 22F shown in Figure 1. As shown in Figure 5, the enclosure 20 may also be configured as enclosure 20G shown in Figure 1 with three modules, 22K, 22L and 22M. As shown in Figure 5, the enclosure 20 includes two shelves 36 dividing the enclosure into the three separate modules 22.

The shelves 36 may be added and interchanged with other sets of shelves by detaching from the shelf supports 40. The shelf supports 40 attach to the shelves 36 with hardware extending through one or more of a number of adjustable holes 70 on the upper surface of the shelf 36 and with a bracket 76 mounting to the top and/or bottom of the vertical supports 40 attached to the bottom of the next upper adjacent shelf 36 or to the enclosure top 34 for easily interchanging sets of different numbers of shelves 36 and associated different lengths of vertical supports 40.

Referring to Figure 6, each shelf 36 includes orifices 72 for receiving the cable conduits 42 and cable. The cable conduits 42 also provide added support and maintain security between different modules.

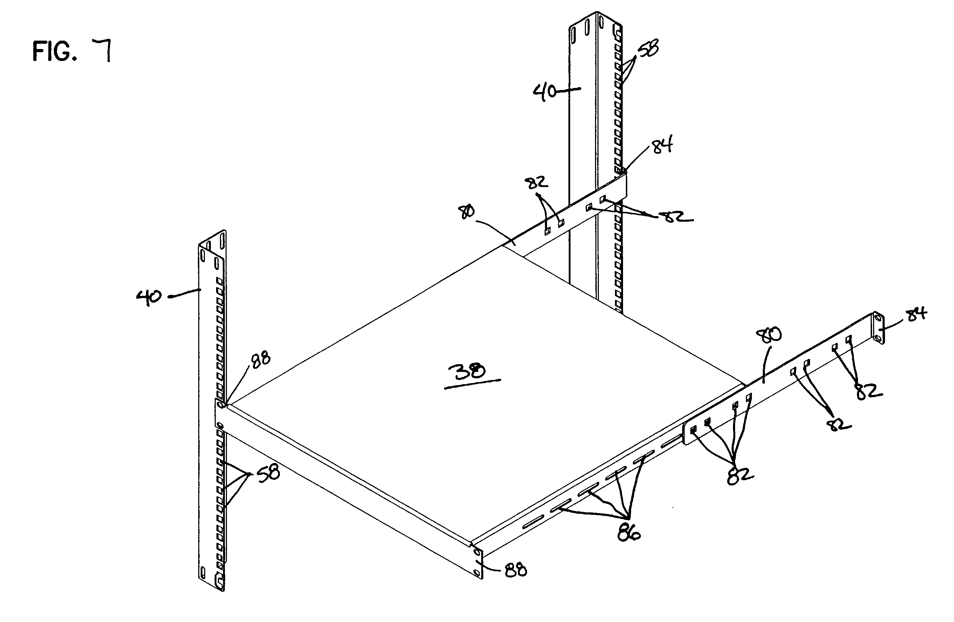

Referring to Figures 7-9, the present system also includes insertion of additional shelving within each of the modules by having a smaller shelf 38 insertable within the module. The vertical supports 40 may also serve as supports for the shelving 38 and may also be placed at different positions within the module rather than at the corners of the shelving 36, such as shown in Figures 2 and 3. Referring again to Figure 7, the shelf 38 includes a front portion with mounting tabs 88 having holes formed therein for attaching into vertically spaced apart mounting holes 58 with traditional hardware. The position of two of the vertical supports 40 may be adjusted depending upon the configuration of the enclosure and the needs for supporting the shelf 38. The supports 40 may be spaced apart from the shelf by extending an adjustment bracket 80 outward from the shelf 38. The adjustment bracket 80 includes shelf-mounting holes 82 that receive hardware that also extends through slots 86 formed in the sides of the shelf 38. With this configuration, the particular position of the bracket 80 relative to the shelf 38 may be adjusted horizontally to a nearly infinite number of positions. The end of the adjustment bracket includes a tab portion 84 having orifices for receiving hardware to mount to the vertical supports 40.

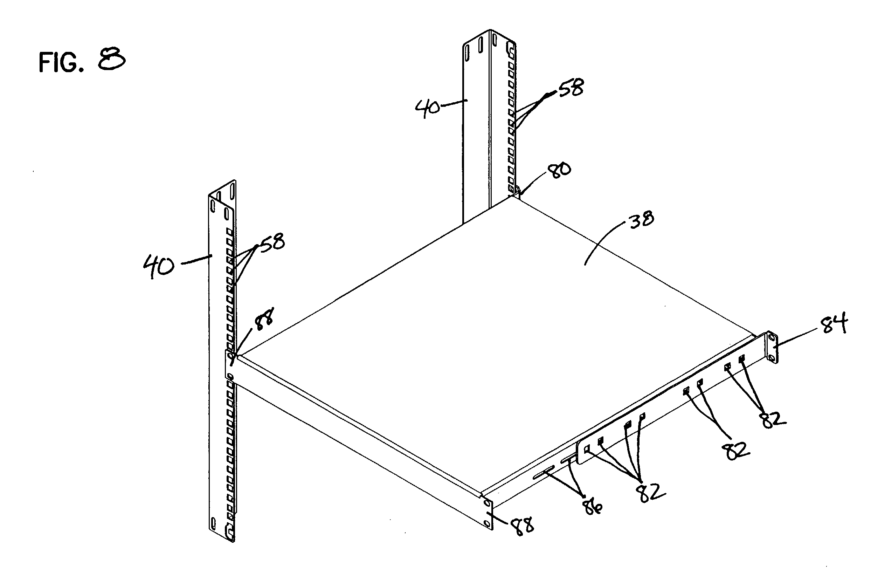

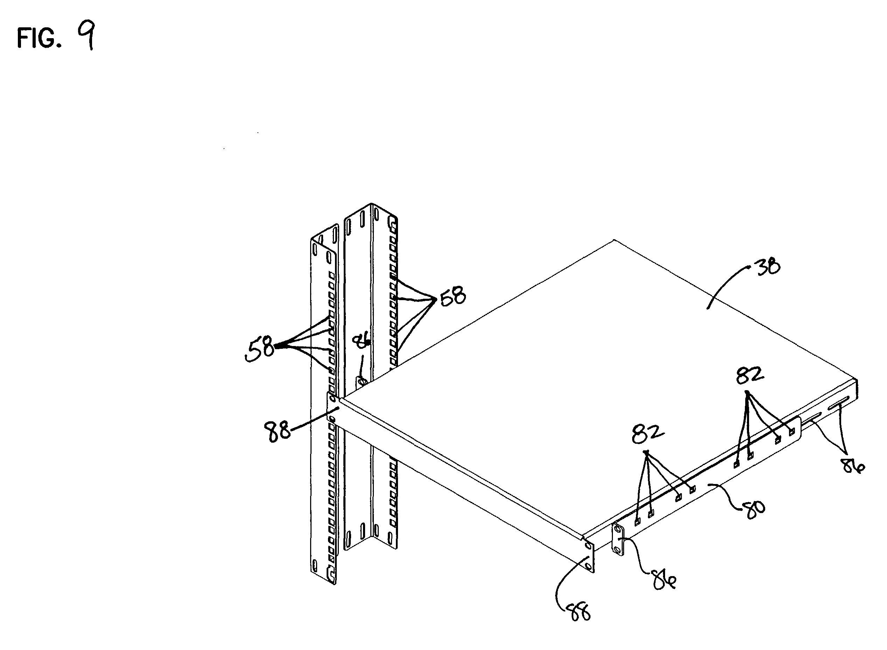

In addition to extending outward at an extended distance as shown in Figure 7, the bracket 80 may be mounted with the tab portion 84 substantially proximate the corners of the shelf 38, as shown in Figure 8. In addition, the bracket 80 is reversible and may be mounted with the tab 86 closer to the tab 88, as shown in Figure 9. With this flexibility of mounting arrangement, the shelf 30 is solidly mounted with adaptability to receive the various pieces of equipment as typically placed within a module. The system also provides for easily removing and repositioning the shelving 38 in the field as equipment is added or taken away and as the number of shelves 38 needed changes.

Referring again to Figure 1, the present invention provides for placing the door handles 46 at either edge of the end of each enclosure 20 and at various heights, depending upon the size of the module required. The system of the present invention provides for changing orientation, number of doors needed at the front and/or rear, the relative heights of the doors and modules 22, and the total number of modules. In order to change the number and size of the module, sets of doors and associated shelves 36 and vertical supports 40 may be interchanged with other sets of doors, shelves and vertical supports. The present invention also provides for such adjustment and interchanging in the field without the need for making permanent modifications, such as drilling holes, to the underlying enclosure frame 24.

It is to be understood, however, that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in that the appended claims are expressed.

## Claims

1. An adjustable enclosure system comprising:
a substantially rectangular framework of interconnected frame members having a plurality of mounting locations orifices;
a housing connected to the framework defining an enclosed space; one or more removable adjustably mounted shelves; and
removably mounted doors mounted to the frame at one or more of the mounting locations.

2. An adjustable enclosure system, according to claim 1, wherein the removably mounted doors comprise first doors mountable at first ones of the mounting locations and second doors mounting at second ones of the mounting locations, wherein the first and second doors are interchangeably mounted.

3. An adjustable enclosure system according to claim 2, wherein the first doors have a first height and the second doors have a second height different from the first height.

4. An adjustable enclosure system according to claim 1, further comprising shelf supports associated with each shelf.

5. An adjustable enclosure system according to claim 4, wherein the shelf supports comprise first shelf supports associated with a first number of shelves and second shelf supports associated with a second number of shelves.

6. An adjustable enclosure system according to claim 4, wherein the shelf supports comprise first shelf supports having a first vertical height and second shelf supports having a second different vertical height.

7. An adjustable enclosure system according to claim 6, wherein the first and second shelf supports connect to edges of an associated shelf and extend upward mounting to one of the adjacent overhead shelf or enclosure top.

8. An adjustable enclosure system according to claim 1, wherein the enclosure includes a shelf corresponding to a vertical position intermediate adjacent doors.

9. An adjustable enclosure system according to claim 1, wherein a plurality of enclosures are connected in a side-by-side relationship forming an expanded enclosure system.

10. An adjustable enclosure system according to claim 1, wherein the mounting locations are positioned proximate opposed sides for reversibly mounting doors to open in either direction.

11. An adjustable enclosure system according to claim 1, wherein the doors are mounted on opposed sides of the framework.

12. An enclosure system according to claim 2, wherein the enclosure system includes a first number of shelves when the system has the first doors mounted and a second number of shelves when the enclosure system has the second doors mounted.

13. An enclosure system according to claim 1, wherein the shelves comprise an adjustable shelf support mounting to an edge of the shelf mountable at a plurality of positions along the edge.

14. An enclosure system according to claim 13, wherein one of the shelf or the shelf support defines horizontal slots receiving a retainer and the other the shelf or shelf retainer includes a plurality of mounting orifices.

15. An enclosure system according to claim 1, wherein the doors comprise one or more first doors having a first size and one or more second doors having a second size, wherein the first and second doors are removable and interchangeable in the field, and wherein the shelves comprise one or more first shelves having first shelf supports mounted at one or more first heights and one or more second shelves having second shelf supports mounted at one or more second heights, and wherein the first and second doors are removable and interchangeable in the field.

16. An enclosure system according to claim 1, wherein the enclosure includes doors mounted to opposite ends of the enclosure.

17. An enclosure system according to claim 1, further comprising cable conduits extending vertically through orifices in the shelves.

18. An enclosure apparatus, comprising:
a substantially rectangular frame;
a housing mounted to the frame;
a first door and shelf system, comprising one or more first doors having a first size and one or more first shelves mounted at one or more first heights;
a second door and shelf system, comprising one or more second doors having a second size and one or more second shelves mounted at one or more second heights;
wherein the first and second door and shelf systems are interchangeable and removably mounted to the frame.

19. An enclosure apparatus according to claim 18, wherein the first and second door and shelf systems are removable and interchangeable in the field without permanent modifications to the frame.

20. An enclosure system comprising:
a plurality of enclosures connected in side-by-side relationship; wherein each enclosure includes a framework supporting a housing; wherein each enclosure includes a module system defining one or more enclosed modules within the housing, wherein each module comprises an associated door and is separated from adjacent modules by one or more shelves, and the one or more modules of each enclosure are removable and interchangeable with other modules having a plurality of sizes.

21. An enclosure system according to claim 20, wherein the doors comprise one or more first doors having a first size and one or more second doors having a second size, wherein the first and second doors are removable and interchangeable in the field, and wherein the shelves comprise one or more first shelves having first shelf supports mounted at one or more first heights and one or more second shelves having second shelf supports mounted at one or more second heights, and wherein the first and second doors are removable and interchangeable in the field.

22. An adjustable enclosure system, according to claim 20, wherein the doors comprise first doors mountable at first ones of a plurality of door mounting locations and second doors mounting at second ones of the mounting locations, wherein the first and second doors are interchangeably mounted.

23. An adjustable enclosure system according to claim 22, wherein the first doors have a first height and the second doors have a second height different from the first height.

24. An enclosure system according to claim 22, wherein the enclosure system includes a first number of shelves when the system has the first doors mounted and a second number of shelves when the enclosure system has the second doors mounted.

25. An adjustable shelving apparatus, comprising:
a shelf member having a side portion with slots formed therein;
a mounting bracket mounting to the side portion, wherein the mounting bracket includes a plurality of mounting orifices, and wherein the mounting bracket is horizontally adjustable relative to the shelf member;
vertical supports mounting to the shelf member and the mounting bracket.

26. An adjustable shelving apparatus according to claim 25, wherein the mounting bracket is reversibly mounted to the shelf member so that the orientation of each end is changed.

27. An adjustable shelving apparatus according to claim 25, wherein the mounting bracket includes an angled end portion mounting to the vertical supports.
